# EUROPÄISCHE PATENTSCHRIFT

(11) **EP 2 108 470 B1**
(45) Veröffentlichungstag und Bekanntmachung des Hinweises auf die Patenterteilung: **06.07.2011**
(21) Anmeldenummer: 09008239.7
(22) Anmeldetag: 20.12.2005
(51) Int. Cl.: B21K 9/00, B60M 1/30

(54) **Verbundprofil mit einem Tragkörper aus Leichtmetallwerkstoff sowie einem Profilband und Verfahren zum Herstellen des Verbundprofils**
Compound profile with a support body of light metallic material and a profile band and method for producing the compound profile
Profil composite formé d'un corps support en métal léger et d'une bande profilée ainsi que son procédé de fabrication

(30) Priorität: 31.01.2005 DE 102005004547
(43) Veröffentlichungstag der Anmeldung: 14.10.2009
(62) Teilanmeldung aus: 05824450.0
(73) Patentinhaber: Engineered Products Switzerland AG (Ltd.), 8048 Zürich (CH)
(72) Erfinder: Wömpner, Diethelm, 78351 Bodman-Ludwigshafen (DE); Netzel, Timo, 78269 Volkertshausen (DE)
(74) Vertreter: Vötsch, Reiner

(56) Entgegenhaltungen:
- EP-A1- 1 683 676
- DE-A1- 2 546 026
- DE-A1- 4 410 688
- US-A- 588 541
- US-A- 4 167 866
- US-A- 5 047 595

## Beschreibung

Die Erfindung betrifft ein Verbundprofil mit einem aus Leichtmetallwerkstoff stranggepressten schienenartigen Tragkörper sowie einem dessen Kopffläche überspannenden Profilband aus einem härteren Metall nach dem Oberbegriff der unabhängigen Ansprüche 1 und 2, wie es aus der US 5,047,595 bekannt ist. Zudem erfasst die Erfindung ein Verfahren zum Herstellen eines solchen Verbundprofiles.

Die nachveröffentlichte EP 1 683 676 A1 beschreibt ein Schienenprofil aus Aluminium mit den Schienenkopf überspannendem Rinnenprofil, an dessen beide zueinander parallele Seitenschenkel jeweils ein seinerseits parallel zum Rinnenboden verlaufender Metallstab rechteckigen Querschnittes angeschweißt ist; die Seitenflächen beider Metallstäbe fluchten miteinander und werden in entsprechend -- miteinander fluchtend -- gestaltete Seiteneinformungen des Schienenkopfes eingeschoben.

Der 1897 veröffentlichten US 588 541 A ist für elektrische Bahnsysteme ein Schienenprofil aus Stahl mit rinnenförmige Abdeck- oder Verschlussprofil aus Kupfer zu entnehmen, das an zwei Seitenschenkeln endwärts angeformte stufenähnliche Innenstreifen etwa dreiecksförmigen Querschnittes aufweist; die beiden Stufenflächen fluchten etwa miteinander. Diese Innenstreifen greifen in entsprechend gestaltete Einformungen des Schienenkopfes ein; an deren jeweilige Firstfläche legt sich eine der Stufenflächen an.

Aus der DE 24 32 541 A1 geht ein Verfahren zum Herstellen von Stromschienen aus einem Trägerprofil und mindestens einer - - wenigstens einen Teil der Oberfläche des als Stromleiter dienenden Trägerprofils bildenden - - Auflage aus Profilband eines anderen Metalls als Deckprofil hoher Abriebfestigkeit hervor. Während eines Strangpreßvorganges wird das Trägerprofil mittels Auspressen eines Blockes durch den Formgebungsquerschnitt einer Pressmatrize erzeugt, und gleichzeitig durchläuft das Profilband zur Matrizenlängsachse parallel den Matrizendurchbruch oder Formgebungsquerschnitt. Während des Pressvorganges entsteht zwischen den beiden Profilkomponenten eine innige metallische Verbindung. Beispielsweise bei Einsatz der Stromschiene zur Elektrifizierung schienengebundener Fahrzeuge erfolgt in Fällen besonders hoher Belastung trotz der innigen metallischen Verbindung langfristig ein Loslösen des Profilbandes von seinem Tragprofil aus Leichtmetall.

Der DE 44 10 688 A1 ist Verbundprofil mit einem Trägerprofil aus Leichtmetall und einem damit verbundenen Profilband zu entnehmen. Letzteres überspannt die Oberfläche eines Schienenkopfes des Trägerprofils, ist querschnittlich rinnenähnlich geformt und weist in seinen Seitenschenkeln von seiner tragkörperseitigen Innenfläche in Abstand zueinander abragende - - Ausformungen auf, welche in den Tragkörper eingebettet sind. Diese Ausformungen begrenzen hinterschnittene Zwischenräume, welche vom metallischen Werkstoff des Tragkörpers formschlüssig ausgefüllt sind. Diese formschlüssige Verbindung ist nicht mit den zur metallischen Verbindung beschriebenen Mängeln behaftet.

Ein Verbundleiterschienenelement zur Stromversorgung eines Bahnfahrzeugs mit einem Belag aus einem Werkstoff hohen mechanischen Widerstandes, der starr auf einem Stab aus elektrisch gut leitfähigem Material befestigt ist sowie die Gleit- bzw. Kontaktfläche für Stromabnehmer des Fahrzeuges bildet, offenbart die DE 25 46 026 A1. Die Befestigung des Belages auf dem als Träger dienenden leitfähigen Stab erfolgt dadurch, dass die Ränder des Belages in den leitfähigen Stab eingeklemmt bzw. eingequetscht werden. Es entsteht wenigstens eine in Längsrichtung verlaufende Eindrückung im Belag, die bis in den leitfähigen Stab eindringt. Für das Verklemmen der Ränder des Belages ist im leitfähigen Stab eine Nut vorgesehen, die eine Lippe abteilt. Letztere führt zum Verklemmen des Belages am leitfähigen Stab, sobald sie zumindest teilweise umgelegt und gegen den Rand des Belages gedrückt worden ist.

Als nachteilig haben sich auch Stromschienen erwiesen, deren Verschleißkomponente durch sie seitlich durchsetzende Schrauben oder zusätzliche Steckorgane am stromführenden Trägerprofils befestigt werden. Andere bekannte Herstellverfahren können nachteiligerweise zu Welligkeiten auf der Oberfläche des Deckprofiles führen, die ihre Ursache im schrittweisen Verstemmen bzw. Stanzen des Trägerprofiles haben:

In Kenntnis dieses Standes der Technik hat sich der Erfinder das Ziel gesetzt, die Verbindung zwischen Trägerprofil und Profilband unter Beibehaltung der besonderen wirtschaftlichen Herstellungsmöglichkeiten zu verbessern.

Zur Lösung dieser Aufgabe führt die Lehre der unabhängigen Ansprüche 1 und 2; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Benennungsbereichen sollen auch innerhalb der genannten Grenzen liegende Werte als Grenzwerte offenbart und beliebig einsetzbar sein.

Erfindungsgemäß ist an das der Kopf- oder Oberfläche des Trägerprofils etwa aufliegende Profilband oder Deckprofil-- bevorzugt aus Edelstahl - - an dessen Längsseiten jeweils ein zur Längsachse des Profilbandes paralleler Anker- oder Einschubstab angefügt, der anderseits in einen seitlichen Steckschlitz des Trägerprofils eingreift; der Einschubstab bzw. das Einschubprofil ist bevorzugt aus dem Werkstoff des Profilbandes gefertigt und mit letzterem durch eine Schweißnaht verbunden. Die Einschubstäbe ergänzen das Profilband auf beiden Seiten und bilden dank der geschweißten Anbindung einen sicheren Schutz für die innenliegende Oberfläche des stromführenden Trägerprofils.

Nach einem weiteren Merkmal der Erfindung entspricht die Dicke des Einsteckendes des profilartigen Einschubstabes der Breite des Steckschlitzes im Trägerprofil, so dass ein fester Sitz der Komponenten aneinander zustande kommt.

Als günstig hat es sich bei einem rinnenähnlich geformten Profilband erwiesen, das dem Schienenkopf eines schienenartigen Trägerprofils aufliegt, den Einschubstab mit einem-- an eine Grundplatte des Profilbandes angeformten - - Seitenschenkel zu verbinden sowie ihn anderseits mit wenigstens einem von jenem Seitenschenkel abragenden Stababschnitt in den entsprechend angeordneten Steckschlitz des Trägerprofils einzusetzen. Die Schweißnaht soll vorteilhafterweise an der Stirnfläche des Seitenschenkels jenes Profilbandes verlaufen.

Die Erfindung sieht hierbei im Querschnitt rechteckförmige Einschubstäbe vor, die innenseitig an den Seitenschenkeln des Profilbandes angelegt sind und deren jeweilige Stirnfläche überragen, mit der sie mittels einer durchgehenden Schweißnaht verbunden sind. Ein solcher im Querschnitt linearer Einschubstab ist erfindungsgemäß mit der Stirnfläche eines Profilband-Seitenschenkels verschweißt sowie zur Querschnittslängsachse des Verbundprofils in einem Winkel von etwa 60° bis 80° - - bevorzugt 70 ° bis 75° - - geneigt.

Die Erfindung erfasst auch ein Verfahren zum Herstellen eines Verbundprofils, bei dem aus Leichtmetallwerkstoff ein Trägerprofil mit einer Kopffläche sowie diese beidseits begleitenden Steckschlitzen stranggepresst wird, zudem in jedem Steckschlitz ein Einschubstab eingebracht und an einen aus dem Steckschlitz ragenden Abschnitt des Einschubstabes ein die Kopffläche übergreifendes Profilband angelegt wird. Der Einschubstab wird mit dem Profilband durchgehend verschweißt.

Zuerst werden also die Einschubstäbe in das Leichtmetallprofil , insbesondere in ein AL-Basisprofil, eingelegt bzw. eingedrückt oder eingerollt oder auch vor dem Verschweißen bzw. im Nachhinein durch bleibende Verformung des Trägerprofils festgerollt oder festgedrückt. Vorgesehen ist dann mit Hilfe einer Andruckrolle mit großem Durchmesser das Edelstahl -Deckprofil auf das Leichtmetall-Trägerprofil zu drücken und unter dieser Vorspannung gleichzeitig rechts und links die Verankerungsstreifen oder Einschubstäbe mit dem Deckprofil zu verschweißen.

Im übrigen ist das sog. Deckprofil bevorzugt ein von einem Walzcoil geschnittenes Edelstahlband, das durch Rollformen in die gewünschte Form gebracht bzw. als geschnittenes Band direkt eingesetzt wird. Der Einschubstab ist ein Edelstahlband - - vorzugsweise die gleiche Legierung wie das Deckprofil - - das vorteilhafter Weise vom Walzcoil geschnitten und durch Rollformen/Abkanten/Aufbörteln/Umbörteln in die gewünschte Form gebracht worden ist.

Um die eingangs erwähnten Mängel zu beseitigen, wird ein kontinuierlich ablaufendes Verbundprofil - - wie Strangpressen für das Trägerprofil und Rollformen - - über die ganze Profillänge von Deckprofil und Einschubstäben bzw. Verankerungsprofilen vorgeschlagen. Die Verbindung wird durch kontinuierliches Schweißen über die Profillänge durchgeführt.

Gefordert wird eine größtmögliche Breite der Schleiffläche mit Bestreichmöglichkeit von der Seite und eine mechanische Verankerung, die auch bei komplett abgenutzten Verschleißprofilen eine Verankerung der dann zwei Restschleifflächen gewährleistet. Zudem ist eine Reduzierung der Einbau-Höhentoleranzen gegenüber bekannten Verbundprofilen erwünscht. Wünschenswert ist auch eine lokale Fertigungsmöglichkeit weltweit, ohne eine große Leichtmetall-Strangpresse aufrüsten zu müssen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1, 9 : jeweils eine Schrägsicht auf einen Abschnitt eines nicht durch die Erfindung geschützten schienenartigen Verbundprofils aus zwei Verbundpartnern;
Fig. 2: den Querschnitt durch das Verbundprofil der Fig. 1 in etwa natürlicher Größe mit einem aus dem Verbundprofil herausgenommenen Bauteil;
Fig. 3, 4: jeweils einen gegenüber Fig. 2 verkleinerten Querschnitt durch ein nicht durch die Erfindung geschützes Verbundprofil anderer Ausgestaltung;
Fig. 5, 6; Fig. 7 rechts: jeweils zwei Hälften (Figur 7 nw die rechte Hälfte) der Querschitte zweier nicht durch die Erfindung geschützter unterschiedlicher Verbundprofile; Fig.7 links; Fig.8
: jeweils zwei Hälften (Figure 7 nur die linke Hälfte) der Querschnitte zweier unterschiedlicher Verbundprofile;
Fig. 10: den Querschnitt durch das nicht durch die Erfindung geschützes Verbundprofil der Fig. 9;
Fig. 11: eine Stirnansicht des einen Verbundpartners;
Fig. 12: eine Seitenansicht zweier Elemente des Verbundpartners der Fig. 11;
Fig. 13: die beiden Verbundpartner der Fig. 10 vor dem Zusammenbau:
Fig. 14 bzw. 18: zwei weitere Ausgestaltungen von nicht durch die Erfindung geschützten Verbundprofilen aus zwei Verbundpartnern;
Fig. 15 bzw. 19: eine Stirnansicht des einen Verbundpartners in Fig. 14 bzw. 18;
Fig. 16 bzw. 20: eine Seitenansicht zweier Elemente des Verbundpartners der Fig. 15 bzw. 19 ;
Fig. 19 , 20: den Elementen der Fig. 11, 12 entsprechende Darstellungen zu Fig. 14 bzw. 18 ;

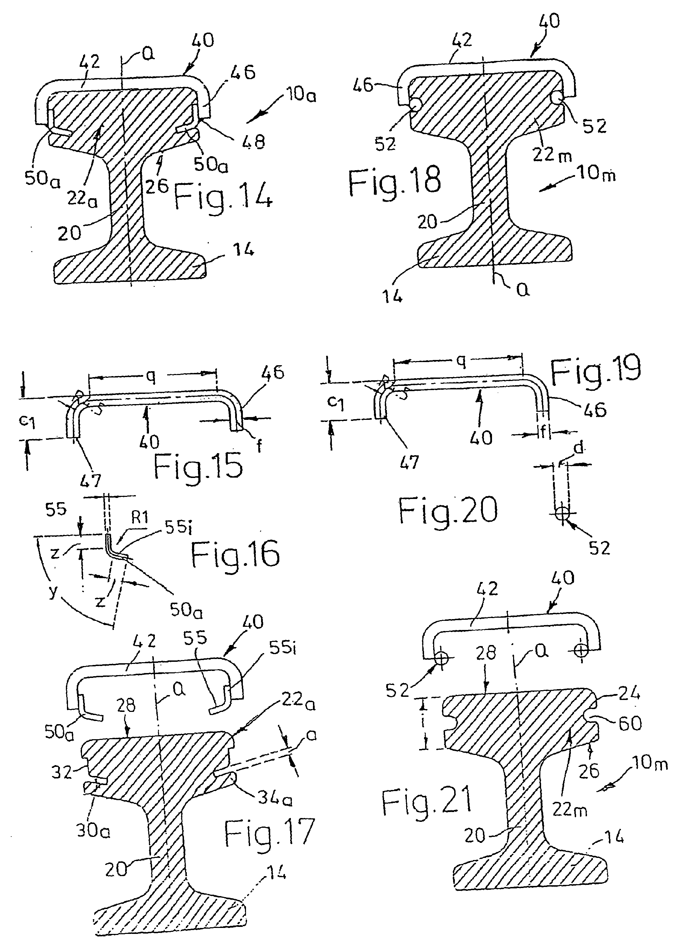

Fig. 17 bzw. 21: jeweils die beiden Verbundpartner der Fig. 14 bzw. 18 vor deren Zusammenbau;

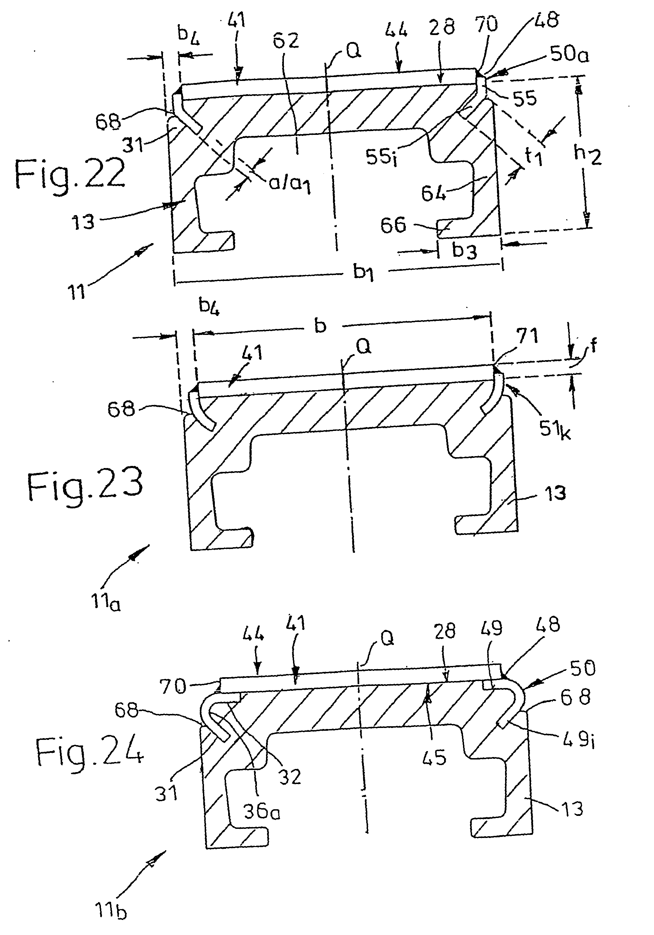

Fig. 22 bis 24 : drei andere Ausgestaltungen von nicht durch die Erfindung geschützten Verbundprofilen in Stirnansicht .

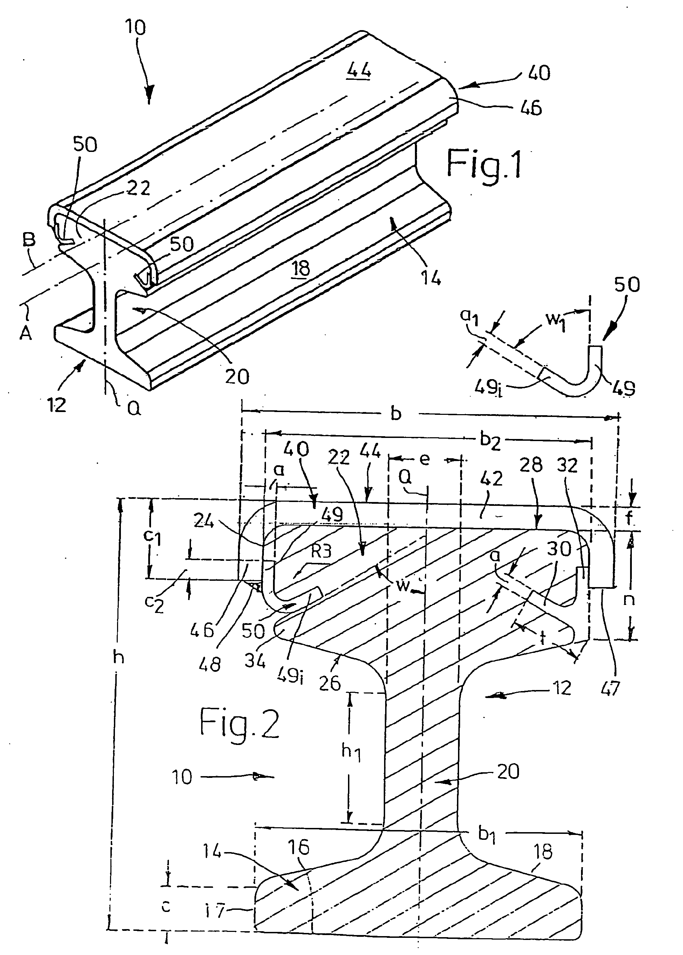

Ein nicht von der Erfindung umfasstes Verbundprofil 10 der Höhe h von hier 105 mm und der maximalen Breite b von 92 mm weist nach Fig. 1 ein schienenartiges Trägerprofil 12 mit einem Schienenfuß 14 und einem an diesen mittels eines Schienensteges 20 angeformten strangartigen Schienenkopf 22 auf. Zwei die Fußfläche 16 des Schienenfußes 14 begrenzende Längskanten 17 der Höhe c von 10 mm verlaufen in einem Abstand bₓ von hier 80 mm parallel zueinander.

Von diesen Längskanten 17 sind die beiden Dachflächen 18 des Schienenfußes 14 zu der die Längsachse A des Verbundprofils 10 querenden Querschnittsmittelachse Q geringfügig aufwärts geneigt und gehen in jenen Schienensteg 20 der Höhe hi von etwa 30 mm sowie der Dicke e von etwa 18 mm über. Vom oberen Ende des Schienensteges 20 gehen die zu den Längskanten 24 des Schienenkopfes 22 etwa aufwärts geneigten Unterflächen 26 dieses Schienenkopfes 22 einer Breite b₂ von 78 mm ab, dessen Außenhöhe n von etwa 28 mm die Lage der Schienenkopf-Oberfläche 28 bestimmt.

Von jeder der Längskanten 24 des Schienenkopfes 22 geht in Fig. 1 ein in einem Winkel w von etwa 60° aufwärts geneigter Steckschlitz 30 der Breite a von hier 4 mm und der Tiefe t von 18 mm aus, dessen in Fig. 2 untere Wandfläche in eine Art Längsrippe 34 des Schienenkopfes 22 übergeht, deren Außenseite von jener Unterfläche 26 gebildet wird. In die Längskante 24 ist eine Längseinformung 32 eingebracht als räumliche Verlängerung des im Querschnitt V-artigen Schlitzes 30, die auch dessen Breite a anbietet.

Dieses Schienen- oder Trägerprofil 12 des Verbundprofils 10 wird in einer aus Gründen der Übersichtlichkeit in der Zeichnung nicht wiedergegebenen Strangpresse aus einem Leichtmetallwerkstoff geformt.

Die Kopf- oder Oberfläche 28 des Schienenprofils 12 bzw. seines Schienenkopfes 22 wird in Endzustand von einem Profilband 40 der Dicke f von 6 mm überspannt, das aus einem Eisen- oder Buntmetall hergestellt ist. Dieses Profilband 40 ist im Querschnitt rinnenartig geformt, und seine von einer Grundplatte 42 ausgehenden - - zueinander sowie zur Längsachse B des Profilbandes 40 parallelen - - Seitenschenkel 46 der Höhe Ci von 20 mm liegen den Längskanten 24 des Schienenkopfes 22 an. In dieser Lage bildet die Außenfläche 44 des Profilbandes 40 die Oberfläche des Verbundprofils 10.

Jedem Seitenschenkel 46 des der Oberfläche 28 des Schienenkopfs 22 aufliegenden Profilbandes 40 ist im Ausführungsbeispiel der Fig. 1, 2 innenseitig ein rinnenartiger Einschubstab 50 etwa V-förmigen Querschnitts eines Öffnungwinkels Wi von etwa 65° achsparallel zugeordnet, dessen

Rinnenschenkel 49, 49i eine Dicke aₓ anbieten, die mit geringem Spiel der Breite a des Steckschlitzes 30 entspricht. Der eine dieser im Querschnitt linearen Rinnenschenkel 49 liegt mit seiner Außenseite - - parallel zur Querschnittslängsachse Q verlaufend - - dem Seitenschenkel 46 des Profilbandes 40 innenseitig in einer Berührungsbreite C₂ von 5 mm an und ist mit diesem durch eine bei 48 angedeutete Schweißnaht dichtend verschweißt. Diese verläuft an der Stirnfläche 47 des Profilband-Seitenschenkels 46. Der andere Rinnenschenkel 49i ist in den benachbarten Schlitz 30 des Schienenkopfes 22 eingefügt. So entsteht ein dauerhafter und dichter Verbund der beiden Verbundpartner 12, 40 des Verbundprofils 10.

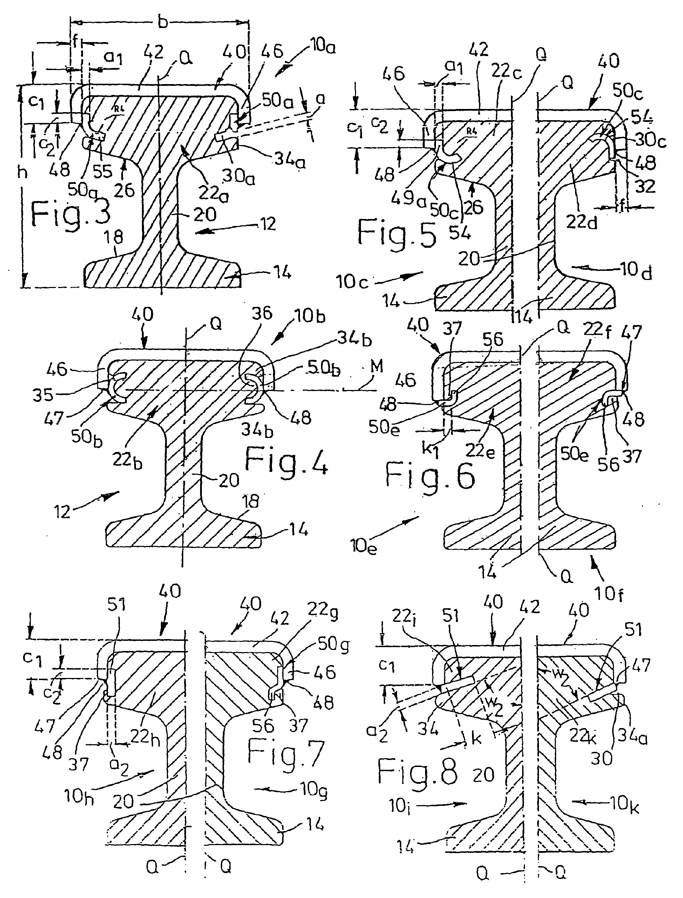

Der Schienenkopf 22ₐ des ebenfalls nicht von der Erfindung umfassten Verbundprofils 10ₐ nach Fig. 3 weist statt eines V-artigen Schlitzes einen im Querschnitt winkelartig gebogenen Steckschlitz 30ₐ der Breite (Radius 4 mm) für einen entsprechend geformten Einschubstab 50ₐ des Profilbandes 40 auf, das an sich entsprechend Fig. 2 gestaltet ist. Zum Schienenfuß 14 hin wird der Steckschlitz 30ₐ durch eine aufwärts geneigte Längsrippe 34ₐ des Schienenkopfes 22ₐ begrenzt. Dieser Steckschlitz 30ₐ nimmt das freie Ende 55 des Querschnitts des Einschubstabes 50ₐ auf, das in Seitenansicht ein Längsstreifen ist.

Auch das nicht von der Erfindung umfasste Profilband 40 der Fig. 4 ist i .w. entsprechend dem der Fig. 2 gestaltet; bei diesem Verbundprofil 10_{b} sind allerdings die beiden Einschubprofile oder Einschubstäbe 50_{b} im Querschnitt halbkreisförmig gebogen und jeweils in ihrem Zenit an die Stirnfläche 47 eines Seitenschenkels 46 des Profilbandes 40 angeschweißt. Die sich in einer die Querschnittslängsachse Q kreuzenden Mittelachse M zueinander öffnenden Einschubstäbe 50_{b} umgreifen am Schienenkopf 22_{b} einen Wulst 36 mit teilkreisfsrmiger Querschnittskontur, den beidseits - - unter Bildung von Einschubschlitzen 35 für die Querschnittsenden des Einschubstabes 50b - - Längsrippen 34_{b} begrenzen.

Fig. 5 zeigt jeweils eine an der Querschnittslängsachse Q endende Hälfte zweier nicht von der Erfindung umfasster Verbundprofile 10_{c}, 10_{d}; die nicht gezeigte andere Hälfte ist jeweils entsprechend gestaltet. Dem Profilband 40 der in Fig. 5 linken Ausbildung ist ein Einschubstab 50_{c} der Dicke ai zugeordnet, dessen Querschnitt aus einem Viertelkreisabschnitt 54 und einem linearen Abschnitt 49_{c} besteht , der mit dem entsprechenden Seitenschenkel 46 des Profilbandes 40 verschweißt ist. Jener Viertelkreisabschnitt 54 ragt zum Schienenfuß 14 hin. Bei der Ausgestaltung der rechten Seite von Fig. 5 ist der Einschubstab 50_{c} so festgelegt, dass der Viertelkreisabschnitt 54 zur Grundplatte 42 des Profilbandes 40 gerichtet ist. In beiden Verbundprofilen 10ₒ, 10_{d} ruht der lineare Abschnitt in einer Längseinformung 32 des Schienenkopfes 22_{c} bzw. 22_{d}, die in einen im Querschnitt gekrümmten Schlitz 30_{c} übergeht.

Auch die nicht von der Erfindung umfasste Fig. 6 zeigt zwei gegenläufig gerichtete Einschubprofile oder Einschubstäbe 50ₑ / winkelförmiger bzw. haken- artiger - - und an sich gleichgestalteter - - Querschnittsform mit entsprechenden Schlitzen im Schienenkopf 22ₑ bzw. 22_{f} des Verbundprofils 10ₑ, 10_{f}. Auch diese Einschubstäbe 50ₑ sind an der Stirnfläche 47 des Profilband-Seitenschenkels 46 verschweißt und hintergreifen mit ihrem freien Hakenabschnitt 56 eine achsparallele Zapfenleiste 37 der Breite kₓ des Schienenkopfes 22ₑ bzw. 22_{f}.

Ein im Querschnitt im Wesentlichen stufenartiger, nicht von der Erfindung umfasster Einschubstab 50_{g} verläuft im Verbundprofil 10_{g} der Fig. 7; er ist zum einen an der Innenfläche des Seitenschenkels 46 verschweißt und hintergreift zum anderen mit seinem freien Hakenende 56 eine Zapfenleiste 37 in der Längsfläche 24 des Schienenkopfes 22_{g}.

An den Seitenschenkel 46 des Profilbandes 40 des von der Erfindung geschützten Verbundprofils 10ₕ der Fig. 7 ist ein im Querschnitt linearer Einschubstab 51 der Dicke a₂ von 4 mm innenseitig angelegt und mit der Stirnfläche 47 des Seitenschenkels 46 so verschweißt, dass auch das - - zu letzterem parallele - - freie Querschnittsende eine Zapfenleiste 37 des Schienenkopfes 22h hintergreift.

In den beiden ebenfalls durch die Erfindung geschützten Ausführungsbeispielen der Fig. 8 ist an die Stirnkante oder Stirnfläche 47 von jedem der Seitenschenkel 46 des Profilstabes 40 ein linearer Einschubstab 51 der freien Länge k von 15 mm so angeschweißt , dass er in einem Winkel W₂ von etwa 70 ° bis 75° zur Querschnittslängsachse Q nach innen verläuft. Im Verbundprofil 10i der linken Figurenseite ist der Einschubstab 51 zur Grundplatte 42 hin gerichtet, im anderen Verbundprofil 10ₖ zeigt er von der Grundplatte 42 weg. Die entsprechenden Schlitze 30 im Schienenkopf 21i bzw. 22ₖ verlaufen jeweils oberhalb einer Längsrippe 34 bzw. 34ₐ.

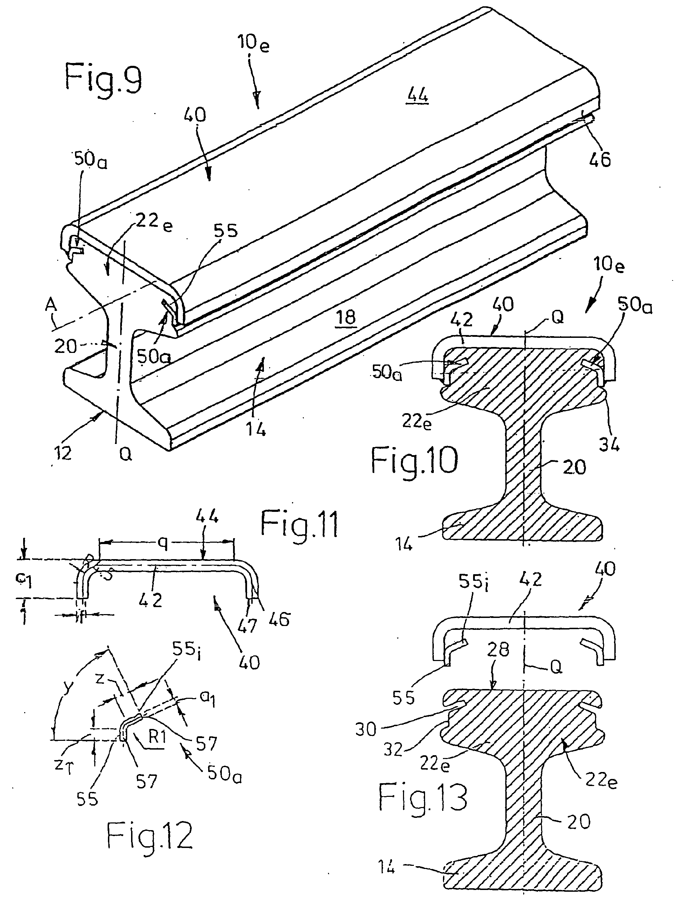

Das nicht von der Erfindung umfasste Verbundprofil 10e der Fig. 9 bis 13 enthält zwei Einschubstäbe 50ₐ, deren Form zu Fig. 3 beschrieben worden ist. Im Gegensatz zu jener Darstellung weisen hier die freien Enden 55 der Einschubstäbe 50ₐ aufwärts, also zur Grundplatte 42 des Profilbandes 40 hin.

Der Fig. 11 ist die genaue Ausbildung des Profilbandes 40 zu entnehmen, dessen gerade Breite q hier 68 mm misst bei einer gestreckten Länge von etwa 116 mm und einer Fläche von etwa 697 mm [Mat. 1.4016 (X 6 Cr 17), mit 5373, 1 g/m].

Der Einschubstab 50ₐ der Fig. 12 bestimmt mit seinen beiden Profilschenkeln 55, 55i der Länge z von 7, 8 mm bzw. 5, 8 mm (Z₁) bzw. den Stirnflächen 57 einen Winkel y von 65°. Fig. 13 zeigt die Länge der oben beschriebenen Schlitze 30 und Längseinformungen 32 im Schienenkopf 22ₑ.

Die Fig. 14 bis 17 zeigen den zu den Fig. 10 bis 13 erörterten Zyklus für das Ausführungsbeispiel der Fig. 3. Fig. 15 entspricht dabei der Fig. 11. In Fig. 16 misst die Länge z bzw. Zi beider Profilschenkel 55, 55i des Einschubstabes 50ₐ 5, 6 mm und der Winkel y hier 76°.

An die Seitenschenkel 46 des nicht von der Erfindung umfassten Profilbandes 40 der Fig. 18 bis 21 ist innenseitig jeweils ein Rundstab 52 des Durchmessers d von 7 mm angeschweißt. Hier beträgt die gestreckte Länge etwa 112 mm, die Fläche etwa 674 mm [Mat. 14016 (X6Cr17) 5189, 8 g/m)].

Zur klemmenden Aufnahme des Rundstabes 52 ist in die Höhenmitte der Längskanten oder -flächen 24 einer Höhe i von 28 mm des Schienenkopfes 22ₙ jeweils eine Längsnut 60 eingeformt, deren Nutentiefstes im Querschnitt von einem Halbkreis bestimmt ist.

Das nicht von der Erfindung umfasste kastenartige Trägerprofil 13 des Verbundprofils 11 der Fig. 22 bis 24 weist eine i. w. rechteckige Querschnittsform der Breite bi von 105 mm sowie der Höhe h₂ von 50 mm auf und ist mit einem Innenraum 62 versehen, der beidseits von Profilschenkeln 64 begrenzt ist, von denen jeweils - - parallel zur Oberfläche 28 und miteinander fluchtende - - Bodenstege 66 der Breite b₃ von 20 mm abragen. Jene Oberfläche 28 ist schmaler als das Trägerprofil 13, da jede von dessen oberen Eckkanten eine Stufeneinformung 68 der Breite b₄ von 5 mm aufweist. Von letzterer geht in Fig. 22 ein i. w. diagonal zur Querschnittsfläche gerichteter Schlitz 31 der Breite a von etwa 3 mm und der Länge tₓ von etwa 9 mm aus. Der Schlitz 31 dient der Aufnahme eines im Querschnitt winkelartigen Einschubstabes 50ₐ / der mit einem Profilschenkel 55i an die Längskante 70 eines plattenförmigen Profilbandes 44 angeschweißt ist, dessen Breite b etwa 95 mm misst bei einer Dicke f von 5 mm. Der freie Profilschenkel 55 sitzt im Schlitz 31.

Die Verbundprofile 11ₐ und 11_{b} bzw. deren Trägerprofile 13 der Fig. 23 bzw. 24 unterscheiden sich durch die Form der Einschubprofile oder Einschubstäbe. 51k bzw. 50 ihrer Profilbänder 41. Der Einschubstab 51ₖ der Fig. 23 ähnelt jenem des Verbundprofils 10ₕ, ist jedoch geringfügig gebogen. Der Einschubstab 50 der Fig. 24 entspricht jenem der Fig. 1, 2.

Er ist jedoch mit einem Rinnenschenkel 49 an die Unterfläche 41 des Profilbandes 41 angelegt und so verschweißt; die Schweißnaht 48 verläuft an der Längskante 70 des Profilbandes 41 und der Außenfläche des Rinnenschenkels 49. Der Eckbereich des Trägerprofils 13 ist entsprechend gestaltet mit einer Längseinformung 32 in der Kopf- oder Oberfläche 28 des Trägerprofils 13_{b} und jener Stufeneinformung 68, zwischen denen ein Wulst 3βₐ parallel zur Profillängsachse verläuft.

## Patentansprüche

1. Verbundprofil (10i) mit einem aus Leichtmetallwerkstoff stranggepressten Trägerprofil (12) sowie einem dessen Kopffläche (28) überspannenden Profilband (40) aus einem härteren Metall, an dessen Längsseiten jeweils ein zu seiner Längsachse (B) paralleler Einschubstab (51) angefügt ist, wobei der Einschubstab (51) mit seinem Profilband (40) durch eine Schweißnaht (48) verbunden ist,
**dadurch gekennzeichnet, dass** der Einschubstab (51):
- in einen seitlichen Schlitz (30) des Trägerprofils (12) eingreift;
- einen rechteckförmigen Querschnitt aufweist;
- mit der Stirnfläche (47) eines Profil-Seitenschenkels (46) des Profilbandes (40) verschweißt ist sowie zu einer Querschnittslängsachse (Q) des Verbundprofils (10i) in einem Winkel (w₂) von etwa 60° bis 80°, bevorzugt 70° bis 75°, geneigt ist.

2. Verbundprofil (10h) mit einem aus Leichtmetallwerkstoff stranggepressten Trägerprofil (12) sowie einem dessen Kopffläche (28) überspannenden Profilband (40) aus einem härteren Metall, an dessen Längsseiten jeweils ein zu seiner Längsachse (B) paralleler Einschubstab (51) angefügt ist, wobei der Einschubstab (51) mit seinem Profilband (40) durch eine Schweißnaht (48) verbunden ist,
**dadurch gekennzeichnet, dass** der Einschubstab (51):
- in einen seitlichen Schlitz des Trägerprofils (12) eingreift;
- einen rechteckförmigen Querschnitt aufweist;
- innenseitig an den Profil-Seitenschenkel (46) des Profilbandes (40) angelegt ist und dessen Stirnfläche (47) überragt, mit der er verschweißt ist.

3. Verbundprofil (10i; 10h) nach Anspruch 1 oder 2, **dadurch gekennzeichnet, dass** das Profilband (40) aus Edelstahl geformt ist.

4. Verbundprofil (10i; 10h) nach einem der Ansprüche 1 bis 3, **dadurch gekennzeichnet, dass** der Einschubstab (51) aus dem Werkstoff des Profilbandes (40) geformt ist.

5. Verbundprofil (10i; 10h) nach einem der Ansprüche 1 bis 4, **dadurch gekennzeichnet, dass** die Dicke (a₂) des freien Endes des Einschubstabes (51) der Breite des Schlitzes (30) entspricht.

6. Verbundprofil (10i; 10h) nach einem der Ansprüche 1 bis 5, **dadurch gekennzeichnet, dass** die Schweißnaht (48) an der Stirnfläche (47) des Seitenschenkels (46) verläuft.

7. Verbundprofil (10i) nach wenigstens einem der Ansprüche 1 oder 3 bis 6, **dadurch gekennzeichnet, dass** die schlitzartige Einformung (30) des Schienenkopfes (22k) von einer in Abstand zur Kopfoberfläche (28) ausgeformten und von der Unterfläche (26) des Schienkopfes (22) begrenzten Längsrippe (34, 34ₐ) untergriffen ist.

8. Verfahren zum Herstellen eines Verbundprofils (10i; 10h) nach wenigstens einem der Ansprüche 1 bis 7, **dadurch gekennzeichnet, dass** aus Leichtmetallwerkstoff ein Trägerprofil (12) mit einer Kopffläche sowie diese beidseits begleitenden Steckschlitzen stranggepresst wird, dass in jeden Steckschlitz ein Einschubstab (51) eingebracht und an einen aus dem Steckschlitz ragenden Abschnitt des Einschubstabes (51) ein die Kopffläche übergreifendes Profilband (40) aus härterem Werkstoff angelegt wird.

9. Verfahren nach Anspruch 8, **dadurch gekennzeichnet, dass** der Einschubstab (51) an dem Trägerprofil (12) festgerollt oder festgedrückt wird.

10. Verfahren nach Anspruch 8 oder 9, **dadurch gekennzeichnet, dass** das Profilband (40) auf das Trägerprofil (12) mit Vorspannung aufgedrückt wird.

11. Verfahren nach einem der Ansprüche 8 bis 10, **dadurch gekennzeichnet, dass** der Einschubstab (51) mit dem Profilband durchgehend verschweißt wird.

## Claims

1. Composite profile (10i) with a bearer section (12) extruded from a light metal material and a profiled strip (40) of a harder metal spanning its top face (28) on each of whose lengthwise sides an insertable bar (51) is added parallel to its longitudinal axis (B), whereby the insertable bar (51) is joined to its profiled strip (40) by a welded seam (48),
**characterized in that** the insertable bar (51):
- engages in a lateral slot (30) of the bearer section (12);
- exhibits a rectangular cross-section;
- is welded to the end face (47) of a profile side limb (46) of the profiled strip (40), and is inclined to a cross-section longitudinal axis (Q) of the composite profile (10i) at an angle (w₂) of approximately 60° through 80°, preferably 70° through 75°.

2. Composite profile (10h) with a bearer section (12) extruded from a light metal material and a profiled strip (40) of a harder metal spanning its top face (28) on each of whose lengthwise sides an insertable bar (51) is added parallel to its longitudinal axis (B), whereby the insertable bar (51) is joined to its profiled strip (40) by a welded seam (48),
**characterized in that** the insertable bar (51):
- engages in a lateral slot (30) of the bearer section (12);
- exhibits a rectangular cross-section;
- attaches on the inside to the profile side limb (46) of the profiled strip (40) and projects beyond its end face (47) to which it is welded.

3. Composite profile (10i; 10h) according to claim 1 or 2 **characterized in that** the profiled strip (40) is formed of stainless steel.

4. Composite profile (10i; 10h) according to one of the claims 1 through 3 **characterized in that** the insertable bar (51) is formed of the material of the profiled strip (40).

5. Composite profile (10i; 10h) according to one of the claims 1 through 4 **characterized in that** the thickness (a2) of the free end of the insertable bar (51) corresponds to the width of the slot (30).

6. Composite profile (10i; 10h) according to one of the claims 1 through 5 **characterized in that** the welded seam (48) runs along the end face (47) of the side limb (46).

7. Composite profile (10i) according to at least one of the claims 1 or 3 through 6 **characterized in that** the slot-like trough (30) of the rail head (22k) is held from underneath by a lengthwise rib (34,34ₐ) shaped spaced from the top face (28) and limited by the bottom face (26) of the rail head (22).

8. Method for fabricating a composite profile (10i; 10h) according to at least one of the claims 1 through 7 **characterized in that** a bearer section (12) with an end face and slots on both sides is extruded from a light metal material, that an insertable bar (51) is inserted in each slot, and a profiled strip (40) of harder material reaching over the end face is attached to a section of the insertable bar (51) projecting from the slot.

9. Method according to claim 8 **characterized in that** the insertable bar (51) is solidly rolled or pressed onto the bearer section (12).

10. Method according to claim 8 or 9 **characterized in that** the profiled strip (40) is pressed onto the bearer section (12) with prestressing.

11. Method according to one of the claims 8 through 10 **characterized in that** the insertable bar (51) is welded throughout with the profiled strip (40).

## Revendications

1. Profil composite (10i) formé d'un support profilé (12) en alliage léger obtenue par filage et d'une bande profilée (40) en métal plus dur recouvrant la face supérieure (28) dudit support profilé, bande sur les côtés longitudinaux de laquelle une baguette d'insertion (51) est rapportée parallèlement à la direction de son axe longitudinal (B), la baguette d'insertion (51) étant liée à la bande profilée (40) au moyen d'un cordon de soudure (48),
**caractérisé par le fait que** la baguette d'insertion (51) :
- s'insère à l'intérieur d'une fente latérale (30) pratiquée dans la section du support profilé (12) ;
- a une section de forme rectangulaire ;
- est soudée à la surface frontale (47) d'une branche latérale (46) de la bande profilée (40), et est inclinée par rapport à un axe longitudinal (Q) de la section du profil composite (10i) selon un angle (w2) d'environ 60° à 80°, de préférence de 70° à 75°.

2. Profil composite (10h) formé d'un support profilé (12) en alliage léger obtenue par filage et d'une bande profilée (40) en métal plus dur recouvrant la face supérieure (28) de ce support profilé, bande sur les côtés longitudinaux de laquelle une baguette d'insertion (51) est rapportée parallèlement à la direction de son axe longitudinal (B), la baguette d'insertion (51) étant liée à la bande profilée (40) au moyen d'un cordon de soudure (48),
**caractérisé par le fait que** la baguette d'insertion (51) :
- s'insère à l'intérieur d'une fente latérale (30) pratiquée dans la section du support profilé (12) ;
- a une section de forme rectangulaire ;
- est insérée le long de la branche latérale (46) de la bande profilée (40) et dépasse de la surface frontale (47) de cette dernière, sur laquelle elle est soudée.

3. Profil composite (10i, 10h) selon la revendication 1 ou 2, **caractérisé en ce que** la bande profilée (40) est réalisée en acier inoxydable.

4. Profil composite (10i, 10h) selon l'une des revendications 1 à 3, **caractérisé en ce que** la baguette d'insertion (51) est réalisée dans le matériau de la bande profilée (40).

5. Profil composite (10i, 10h) selon l'une des revendications 1 à 4, **caractérisé en ce que** l'épaisseur (a2) de l'extrémité libre de la baguette d'insertion (51) correspond à la largeur de la fente (30).

6. Profil composite (10i, 10h) selon l'une des revendications 1 à 5, **caractérisé en ce que** le cordon de soudure (48) est réalisé le long de la surface frontale (47) de la branche latérale (46).

7. Profil composite (10i) selon au minimum l'une des revendications 1, ou 3 à 6, **caractérisé en ce** fait que la partie en forme de fente (30) de la tête du rail (22k) repose sur un rebord longitudinal (34, 34a) formé à distance de la surface supérieure de la tête du rail (28) et limité par la face inférieure (26) de la tête du rail (22).

8. Procédé de fabrication d'un profil composite (10i, 10h) selon au minimum l'une des revendications 1 à 7, **caractérisé en ce qu'**un support profilé (12) en alliage léger ayant une face supérieure et des fentes d'insertion de chaque côté est obtenu par filage, **en ce qu'**une baguette d'insertion (51) est insérée dans chacune des fentes d'insertion et **en ce qu'**on fait accoster une bande profilée (40) en matériau plus dur recouvrant la totalité de la face supérieure sur un tronçon de la baguette d'insertion (51) qui déborde de la fente d'insertion.

9. Procédé selon la revendication 8, **caractérisé en ce que** la baguette d'insertion (51) est fermement introduite dans le support profilé (12) par roulage ou par pression.

10. Procédé selon la revendication 8 ou 9, **caractérisé en ce que** la bande profilée (40) est appliquée avec une précontrainte sur le support profilé (12).

11. Procédé selon l'une des revendications 8 à 10, **caractérisé en ce que** la baguette d'insertion (51) est soudée à la bande profilée par un cordon de soudure continu.
